# EUROPEAN PATENT APPLICATION

(11) **EP 0 838 786 A1**
(43) Date of publication of application: **29.04.1998**
(21) Application number: 97919714.2
(22) Date of filing: 28.04.1997
(51) Int. Cl.: G06T 15/00

(54) **METHOD OF PRODUCING POLYGON DATA, IMAGE PROCESSOR TO WHICH THE METHOD IS APPLIED, AND EXPANDED FUNCTION BOARD**

(30) Priority: 07.05.1996 JP 112299/96
(71) Applicant: SEGA ENTERPRISES, LTD., Tokyo 144 (JP)
(72) Inventor: SUZUKI, Masayuki, Sega Enterprises, Ltd., Tokyo 144 (JP); MORIOKA, Seisuke, Sega Enterprises, Ltd., Tokyo 144 (JP); KURODA, Ryoji, Sega Enterprises, Ltd., Tokyo 144 (JP)
(74) Representative: Billington, Lawrence Emlyn
(86) International application number: JP9701471
(87) International publication number: WO9742604

(57) **Abstract**

A method for generating new polygon data by the use of the vertex data of the polygon and a video image processing device employing the same are disclosed. In the method, whenever a video image formed by linking a plurality of objects, each of which is a minimum unit, is moved, new polygon data can be generated by performing coordinate transformation for polygon data of said objects. Additionally, the polygon data of, at least, one object of the plurality of the objects is generated according to other polygon data and a link information.

## Description

### Field of the Invention

The present invention relates to a method for generating polygon data and a video image processing device using the same. More particularly, it relates to a method for generating new polygon data by the use of vertex data of polygons and a video game unit employing the same.

### BACKGROUND OF THE INVENTION

Computer graphics for constructing a video image model by linking polygons expressed by coordinates in a three-dimension have been developed for practical use. In such the computer graphics, it is usually necessary to re-calculate three-dimensional coordinates of a plurality of polygons forming a video image model, as corresponding to motions of the video image model displayed on a display device.

The coordinate calculation is executed by dividing the video image model into a plurality of minimum units, which are subject to move for the motions of the video image model, in consideration of calculation efficiency, and each of the plurality of minimum units is hereinafter called as an object.

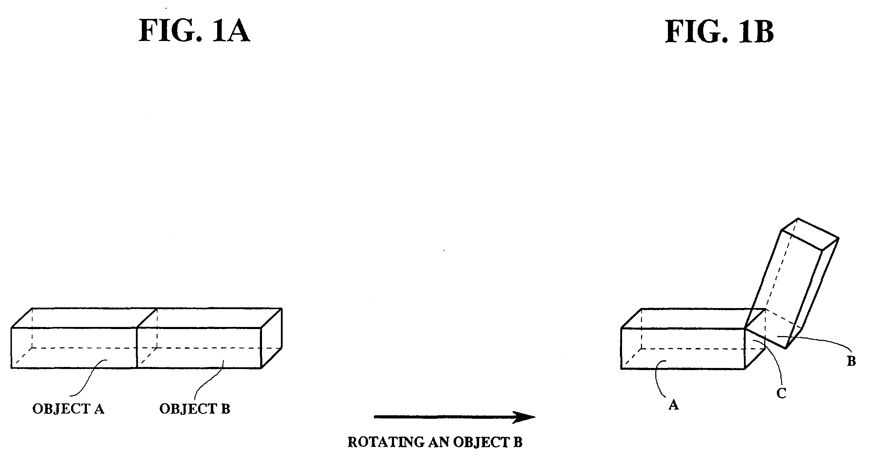

Figs. 1A and 1B are explanatory diagrams for explaining relationship between the motion of a video image model and each object. As shown in the diagrams, it is assumed that one video image model is formed of two objects A and B, and further, the object B of the video image model shown in Fig. 1A is rotated and the video image model is changed as shown in Fig. 1B.

Then, the objects A and B are respectively formed of six polygons, each of which is a square. Whenever the video image model is moved, three-dimensional coordinates on each four vertexes of six polygons should be updated as corresponding to Figs. 1A and 1B.

Additionally, as shown in Fig. 1B, a dis-linked portion C between the objects A and B is generated when the object B is rotated.

### SUMMARY OF THE INVENTION

In this way, whenever the video image model is moved, it is required to re-calculate vertex coordinates of each video image model in such the assumed example as shown in Figs. 1A and 1B. Further, in the example of Figs. 1A and 1B, when the objects A and B are intended to express as articulations, the dis-linked portion C is generated, and the motion of the video image becomes unnatural as the articulations. Therefore, there has been necessary to readjust positions of the objects A and B.

Accordingly, it is an object of the present invention to provide a method for generating polygon data in which calculation of vertex coordinates can be efficiently executed, and a video image processing device and an extended functional board for the video image processing device using the same.

It is another object of the present invention to provide a method for generating polygon data by which a video image can be naturally expressed without increasing the amount of data, and a video image processing device and an extended functional board using the same.

It is further object of the present invention to provide a method for generating polygon data in which the polygon data can be easily reused, so that polygon data having flexibility can be generated, thus giving variety to form objects, and a video image processing device and an extended functional board employing the same.

To achieve the above-described objects of the present invention, in a first mode of a method for generating new polygon data by performing coordinate transformation for polygon data of objects whenever a video image model formed by linking a plurality of objects, each of which is a minimum unit, is moved, at least one object of the plurality of objects, each of which is a minimum unit, is generated and added according to other polygon data and link information.

Further, in a second mode of a method for generating new polygon data according to the present invention, vertex coordinates of the other polygon data are employed as vertex coordinates of the objects to be added in the first mode of the present invention.

In a third mode of a method for generating new polygon data according to the present invention, the link information includes numbers of vertexes of the other polygon data and vertex numbers of the polygons to be employed, and the object to be added is specified by the vertex numbers of the employed polygon.

Additionally, in a first structure of a video image processing device for generating polygon data according to the present invention, the video image processing device includes a work memory for storing polygon data of a plurality of objects for forming a video image model, and a digital signal processor having a function of transforming coordinates of the polygon data sent from the work memory for generating new polygon data by adding polygon data of, at least, one object of the plurality of objects forming the video image model according to the polygon data and link information of other objects on the coordinate transformation.

Further, in a second structure of a video image processing device for generating new polygon data according to the present invention, vertex coordinates of the other polygon data are employed as vertex coordinates of the object to be added in the first structure.

Furthermore, in a third structure of a video image processing device for generating new polygon data according to the present invention, the link information includes numbers of vertexes of the other polygon data, and vertex numbers of the polygons to be employed, and the object to be added is specified by the vertex numbers of the employed polygon.

An extended functional board to be connected to a console of a video image processing device, the board includes a first function circuit for generating new polygon data by coordinate transformation for polygon data of object whenever a video image model formed by inking a plurality of objects, each of which is a minimum unit, is moved, and a second function circuit for generating and adding polygon data of, at least, one object of the plurality of objects for forming the video image model according to other polygon data and link information.

Further, in a second structure of an extended functional board to be connected to a console of a video image processing device according to the present invention, the coordinate transformation is performed by a command sent from a CPU provided on the console of the video image processing device.

### BRIEF DESCRIPTION OF THE DRAWINGS

Figs. 1A and 1B are explanatory diagrams of one processing method when rotating an object.

Figs. 2A and 2B are explanatory diagrams of merits for using a method according to the present invention when rotating an object.

Fig. 3 is a block diagram for illustrating an outline of an embodiment according to the present invention.

Fig. 4 is an explanatory diagram of an object data sent from a CPU in an embodiment according to the present invention.

Fig. 5 is an explanatory diagram of an embodiment in which object data is added as an output result in a method according to the present invention.

Fig. 6 is a block diagram for illustrating an apparatus employing to the present invention.

Fig. 7 is an explanatory diagram of a content of a memory and a data flow on the example shown in Fig. 5.

### PREFERRED EMBODIMENTS OF THE PRESENT INVENTION

Embodiments of the present invention will be now explained accompanying with the attached drawings. In the attached drawings, the same reference numerals or symbols are used to denote identical or similar components.

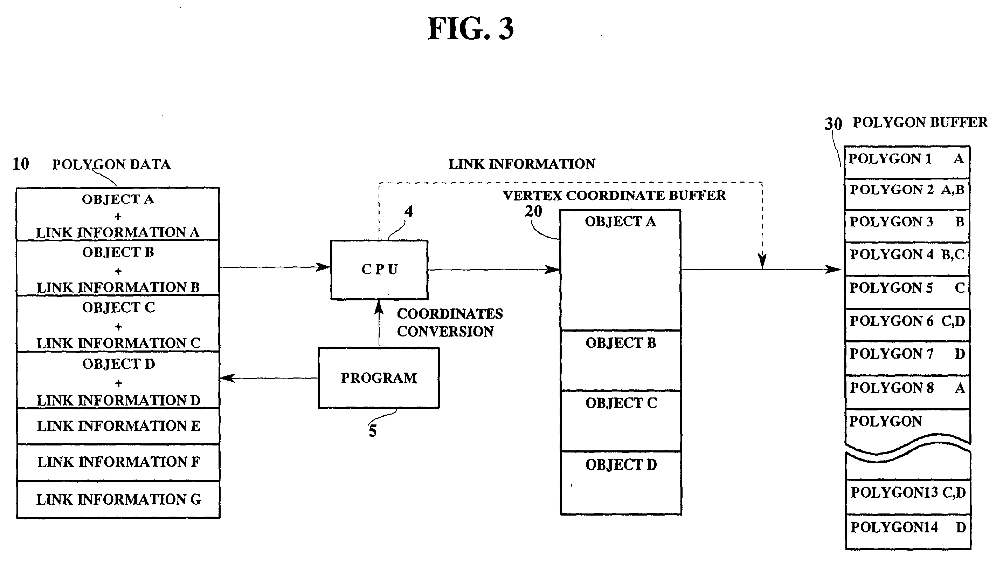

Fig. 3 is a block diagram showing an outline of an embodiment according to the present invention. In Fig. 3, data tables 10, 20 and 30 are respectively stored in a work memory, such as a RAM. The contents of the work memory will be explained later.

Program and polygon data are stored in a ROM 5. When a system is used as a video game apparatus, for example, a ROM cartridge or a CD-ROM is used as the ROM 5. A CPU 4 controls to execute the program data stored in the ROM 5.

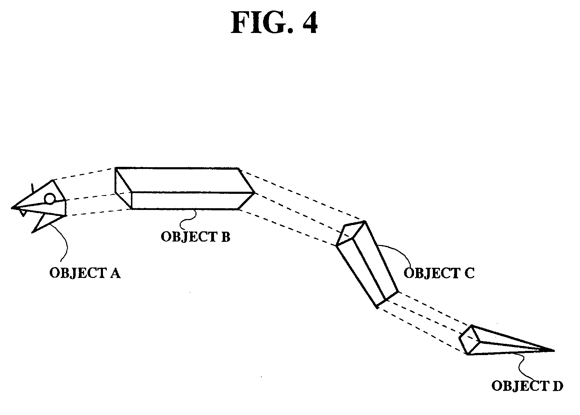

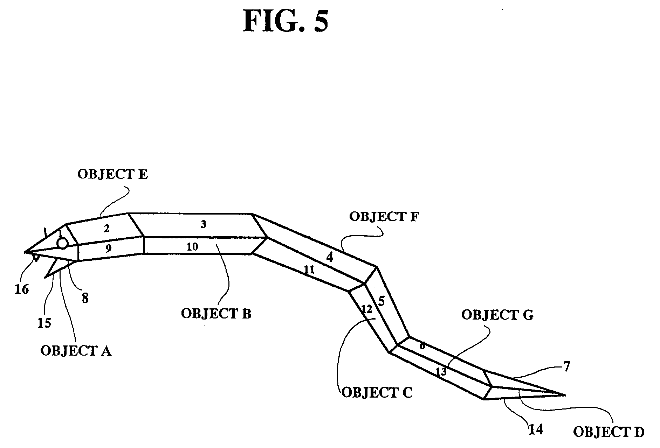

A method according to the present invention on the structure shown in Fig. 3 will be now explained by taking a video image model having polyariculations shown in Figs.4 and 5.

At first, polygon data read out from the ROM 5 under the control of the CPU 4 are registered in a polygon data table 10. Then, data sent out to the polygon data table 10 are polygon data that form objects A to D as shown in Fig. 3.

A video image model as an example is formed of the objects A to G as shown in Fig. 5. Therefore, in the embodiment of the present invention, only link (connection) information of objects E, F and G respectively linking to the objects A and B, the objects B and C, and the objects C and D is sent out from the ROM 5 under the control of the CPU 4 and is registered as polygon data in the polygon data table 10 shown in Fig. 3.

The object data and link information are included in the polygon data of the objects A to D. Further, the above-noted link information is data including numbers of vertexes and the used vertex numbers of polygons.

After completing registration of the link information in the polygon data table 10, the CPU 4 converts vertex coordinates of polygons forming the objects A to D according to a coordinate transforming information read out from the program ROM 5. The above-described coordinate transforming information includes a rotation angle and a moving distance of each object.

Therefore, vertex coordinates of the polygons forming the objects A to D converted according to the coordinate transforming information are stored in a table 20 for buffering vertex coordinates per each corresponding object.

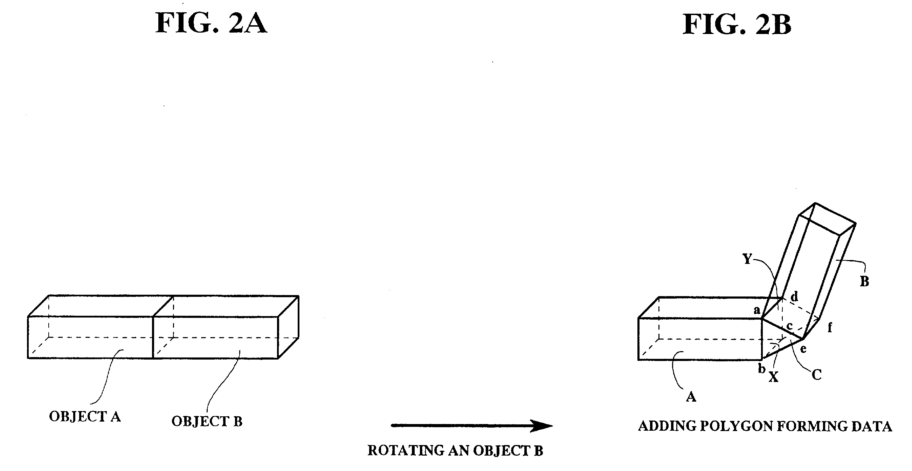

Features of the present invention will be now compared with the assumed example shown in Figs. 1A and 1B in accompanying with Figs. 2A and 2B. In Figs. 2A and 2B, when the video image is changed from Fig. 2A to Fig. 2B by a rotation of the object B, an object C linking the objects A and B is added according to the present invention.

Then, six vertexes a to f of the polygons forming the object C are overlapped to the vertexes of the polygons forming the objects A and B. That is, a polygon X of the object A has vertexes a, b, c and d. Further, a polygon Y of the object B has vertexes a, d, e and f.

Therefore, it is apparent that the object C can be obtained by specifying a link connection between the polygon X of the object A and the polygon Y of the object B, that is, the vertexes a, b, c, d and the vertexes a, d, e, and f of the polygons.

One embodiment according to the present invention shown in Figs. 4 and 5 will be now considered. In the relationship of Figs. 4 and 5, which is similar to the relationship of Figs. 2A and 2B, an object E linking objects A and B is shown with polygons 2 and 9 in Fig. 5. These polygons are linked to polygons 1 and 8 of the object A and are further linked to polygons 3 and 10 of the object B.

Similarly, an object F linking the objects B and C is shown with polygons 4 and 11. These polygons are linked to the polygons 3 and 10 of the object B and are further linked to polygons 5 and 10 of the object C.

Further, an object G linking the objects C and D is shown with polygons 6 and 13. These polygons are linked to the polygons 5 and 12 of the object C and are further linked to polygons 7 and 14 of the object D.

In this example, the polygons 1 and 8 of the object A, the polygons 3 and 10 of the object B, the polygons 5 and 12 of the object C and the polygons 7 and 14 of the object D are already registered and stored in the vertex coordinate buffer table 20 shown in Fig. 3 after transforming coordinates for the polygons.

Accordingly, the CPU4 reads out the link information from the polygon data table 10 and links the polygons, which form each of the objects stored in the vertex coordinate buffer table 20 according to the link information. The result of the connection (linking) is stored in a polygon buffer table 30.

In Fig. 3, polygon data are arranged in order of the number, such as polygon 1, 2..., which are linked according to the link information. Alphabets A, B.... attached to each polygon in the polygon buffer table 30 are linked to vertex coordinates of the polygons included in the corresponding objects A, B, C and D in the vertex coordinate buffer table 20.

Thereby, in the example shown in Fig. 4, although the polygon data subject to the real coordinate transforming calculation are the polygons forming the objects A, B, C and D, the objects E, F and G which are added for linking objects as explained in Figs. 2A and 2B can be obtained by employing the polygon data resulted from the coordinate transformation calculation stored in the vertex coordinate buffer table 20 according to the link information.

The polygon data employed according to the link information can be specified by numbers of the vertexes of each polygon included in the link information described above and the vertex numbers of the polygons employed for linking, which are selected from the vertexes forming polygons.

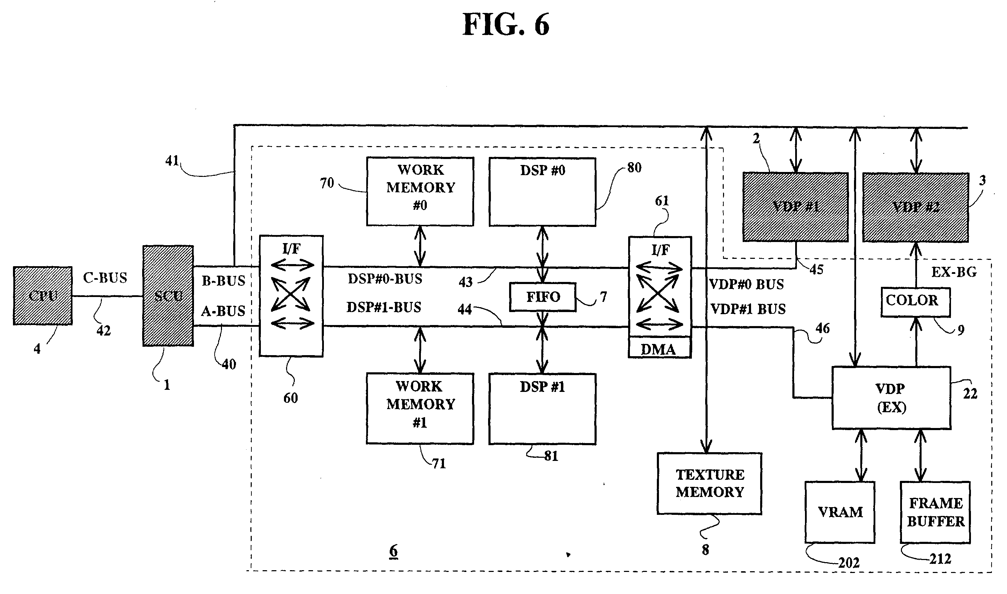

Next, one embodiment applying a method according to the present invention to a video game apparatus as a video image processing device will be now explained. Fig. 6 is a block diagram of a video game apparatus for executing the method according to the present invention, more particularly, an extended functional board for extending the video image processing function, which is connected to a console of the video game apparatus.

In Fig. 6, the console of the video game apparatus includes a system control unit 1 having a function of DMA (Dynamic Memory Access), and first and second video display processors 2 and 3. Other components are provided on the extended functional board.

In Fig. 6, a section 6 surrounded by a broken line is an extended functional board extendedly connected to a console of the video image processing device, which includes a CPU 4, first and second VDPs 2 and 3, to extend a basic function of the video image processing device.

In Fig. 6, the extended functional board for video image processing includes a first interface circuit 60 connected to an A-BUS 40 and a B-BUS 41. The board 6 further includes a second interface circuit 61.

The first and second interface circuits 60 and 61 are connected by the DSP #0-BUS 43 and the DSP #1-BUS 44. A first work memory 70 and a first digital signal processor (DSP) 80 are connected to the DSP #0-BUS 43, and further, a second work memory 71 and a second digital signal processor (DSP) 81 are connected to the DSP #1-BUS 44.

In the example, each of the first and second DSPs 80 and 81 has a processing function with floating-point arithmetic of 32 bits, and includes a high speed inner RAM for commonly storing program or data of predetermined bits so that the DSPs 80 and 81 can be freely programed. Either of the A-BUS 40 and the B-BUS 41 can be accessed to the inner RAM by a switching function of the first interface circuit 60.

As two DSPs 80 and 81 are respectively connected to independent buses, even if one DSP is monopolized by accessing from the system control unit 1, the other DSP can be activated without any failures.

A FIFO (First-In-First-Out) memory 7 is connected between the DSP #0-BUS 43 and the DSP #1-BUS 44 so that data can be transmitted between the above-described first and second work memories 70 and 71 through the buses 43 and 44.

The extended board 6 further includes an extended video display processor 22 for drawing the objects (model) similar to the first video display processor 2. Therefore, two video display processors 2 and 22 can operate in parallel to give efficiency for processing data in high speed.

The extended video display processor 22 further includes a VRAM 202 used as a local RAM having a predetermined memory capacity and a frame buffer 212 for two frames.

A texture memory 8 supports a DMA (Dynamic Memory Access) to the frame buffer 212 by the extended video display processor 22 to compensate clipping process. In this embodiment, the texture memory 8 has a capacity of 4M bits and becomes a source from which data is read out on DMA.

The DMA is accessed by a register set command sent from the first video display processor 2 to transfer cell information for one raster to the extended video display processor 22. Further, the B-BUS 41 can be also accessed directly from the texture memory 8.

A color interface circuit 9 can interface video image data from the extended video display processor 22 to an external video image input of the second video display processor 3. Thereby, all color resolutions provided in an electronics apparatus can be supported, and a separate color RAM can be used independently from the second video display processor 3.

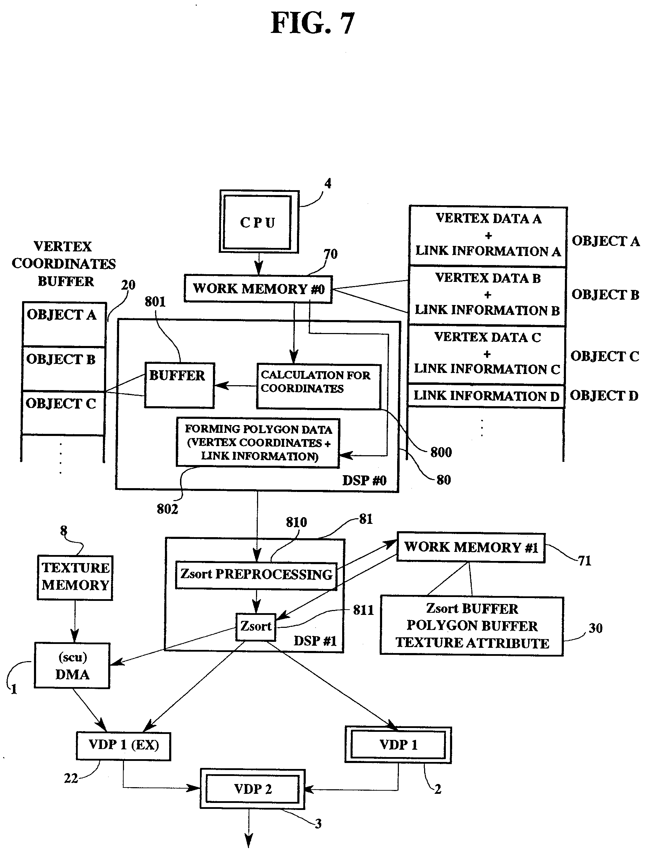

A content in each memory and data flowing is shown in Fig. 7 when applying the present invention to the extended functional board for a video image formed as described above.

In Figs. 6 and 7, the polygon data table 10 shown in Fig. 3 is formed in the work memory 70 according to command data sent from the CPU 4 to store vertex data and link information.

The first DSP 80 includes a coordinate calculation functional block 800 for transforming coordinates of the vertex data and the link information stored in the polygon data table 10 formed in the work memory 70 according to the command data sent from the CPU 4.

The first DSP 80 further includes a buffer memory 801 for storing coordinate transformation data output from the coordinate calculation functional block 800, which is corresponding to the vertex coordinate buffer table 20 shown in Fig. 3, and a functional block 802 for inputting the vertex coordinates sent from the buffer memory 801 and the link information sent from the work memory 70 to form the polygon data.

Then, polygon data formed by the vertex coordinates and the link information in the functional block 802 are sent to the second DSP 81. The second DSP 81 performs sort processing, by which the polygon data is arranged in depth direction or Z axis direction to determine the displaying order of the polygon data.

Therefore, a pre-processing functional block 810 for Z sort processing stores the received polygon data in the work memory 71 as the polygon buffer table 30 shown in Fig. 3 at first. The work memory 71 temporally stores the data sorted on Z sort processing.

A Z sort process functional block 811 in the DSP 81 includes a Z sorting processing function of the polygon data stored in the work memory 71. The Z sorting processing is not directly related to the present invention, and therefore, the explanation will be omitted here.

After Z sorting processing, the sorted polygon data is transferred to the SCU1 and the VDPs 2 and 22. Further, the polygon data is modified, such as enlarged or reduced as needed in the first VDPs 2 and 22, the data is synthesized with scroll data in the second VDP 12, and then, the synthesized video image is displayed on a display device, not shown in the diagram.

### INDUSTRIAL APPLICABILITY

As described according to the embodiment, it becomes possible to reduce an amount of polygon data, which is subject to calculation, and to realize efficiency of calculation by employing polygon data to which coordinate transformation is performed according to link (connection) information.

It is also possible to express motions more naturally without increasing the data amount, especially motions of a video image model having polyariculations.

## Claims

1. A method for generating new polygon data by performing coordinate transformation for polygon data of objects whenever a video image model formed by linking a plurality of objects, each of which is a minimum unit, is moved,
wherein at least one object of the plurality of objects is generated and added according to other polygon data and link information.

2. The method according to claim 1,
wherein vertex coordinates of said other polygon data are employed as vertex coordinates of the object to be added.

3. The method according to claim 1,
wherein said link information includes numbers of vertexes of said other polygon data and vertex numbers of the polygon to be employed, and said object to be added is specified by said vertex numbers of the employed polygon.

4. A video image processing device comprising:
a work memory for storing polygon data of a plurality of objects forming a video image model; and
a digital signal processor having a function of transforming coordinates of the polygon data sent from said work memory for generating new polygon data by adding polygon data of, at least, one object of the plurality of objects forming said video image model according to polygon data and link information of other objects on said coordinate transformation.

5. The video image processing device according to claim 4,
wherein vertex coordinates of said other polygon data are employed as vertex coordinates of said objects to be added.

6. The video image processing device according to claim 5,
wherein said link information includes numbers of vertexes of said other polygon data and vertex numbers of the polygon to be employed, and said object to be added is specified by said vertex numbers of the employed polygon.

7. An extended functional board to be connected to a console of a video image processing device, said board comprising:
a first function circuit for generating new polygon data by coordinate transformation for polygon data of objects, whenever a video image model formed by linking a plurality of objects, each of which is a minimum unit, is moved; and
a second function circuit for generating and adding polygon data of, at least, one object of the plurality of objects for forming said video image model according to other polygon data and link information.

8. The extended functional board according to claim 7,
wherein said coordinate transformation is performed by a command sent from a CPU provided on said console of the video image processing device.
